# EUROPEAN PATENT APPLICATION

(11) **EP 3 647 468 A1**
(43) Date of publication of application: **06.05.2020**
(21) Application number: 17905415.0
(22) Date of filing: 09.05.2017
(51) Int. Cl.: C25B 15/02, C25B 1/04

(54) **SYSTEM FOR MONITORING AND CONTROLLING AN ELECTROLYSIS STACK AND METHODS FOR MINIMISING THE DEGRADATION OF THE STACK AND MAXIMUM HYDROGEN PRODUCTION WITH SAID SYSTEM**

(71) Applicant: H2B2 Electrolysis Technologies, S.L., 28010 Madrid (ES)
(72) Inventor: DUQUE LÓPEZ, María, 28010 Madrid (ES); MÁRQUEZ GÓMEZ, Daniel, 28010 Madrid (ES); GARCÍA GÓMEZ, Covadonga, 28010 Madrid (ES); BREY SÁNCHEZ, José Javier, 28010 Madrid (ES)
(74) Representative: Monzón de la Flor, Luis Miguel
(86) International application number: PCT/ES2017/070289
(87) International publication number: WO 2018/189409

(57) **Abstract**

System that allows monitoring and controlling a stack, as well as providing two different operational methods for said system that enable a user to select between an operational method that minimises stack degradation or an operational method that maximises hydrogen production. The system comprises a first control loop (2) meant to ensure that the temperature at the stack input does not exceed a certain temperature, a second control loop (2) meant to ensure that the temperature difference between the stack input and output does not exceed a certain value; a third control loop (15) meant to ensure that the water conductivity does not exceed a certain value; and a controller for the current applied to the stack so that it is always within a specified range of values.

## Description

### PURPOSE OF THE INVENTION

The purpose of the present invention, as indicated by its title, is a system for monitoring and controlling an electrolysis stack. The term stack is widely used in the field of electrolysis and will be used throughout the specification.

This system allows using two methods, one for minimising stack degradation and another for maximising hydrogen production by simply changing the control parameters of the system.

The present invention is characterised by comprising several control loops and means for controlling the current density, such that an end user can select between two different operation modes depending on the needs at each time, all of this using the same monitoring and control system.

Therefore, the present invention is confined within the scope of control means and electrolysis stacks.

### BACKGROUND OF THE INVENTION

PEM (Polymer Electrolyte Membrane) stacks for hydrogen production rarely fail catastrophically; instead, they tend to 'die' slowly. Stack lifetime is generally expressed as an acceptable degradation of efficiency in µV/h, although this is seldom found in manufacturer data sheets. A linear degradation of 1 µV/h, for example, results in an additional power consumption of approximately 2 kWh/kg H2 produced after 60,000 hours of continuous operation. The literature indicates that stack degradation depends on numerous factors, such as the ΔT to which the stack is subjected, the current density, or the conductivity of the water flowing in it.

Several prior art documents are known that attempt to determine a model for stack degradation as a function of various parameters.
- Durable Membrane Electrode Assemblies for Proton Exchange Membrane Electrolyzer Systems Operating at High Current Densities P.Lettenmeier, R. Wang, R.Abouatallah, S.Helmly et al.
- Fuel cell micro-CHP techno-economics: Part 2 - Model application to consider the economic and environmental impact of stack degradation A.D. Hawkes, D.J.L. Brett, N.P. Brandon.
- A model for solid oxide fuel cell (SOFC) stack degradation Anil V. Virkar.
- US2008292927 relates to a cathode whose humidity can be controlled to prevent degradation due to cathode dryness.

However, none of the documents cited above allows a user to select control parameter values for a stack such that an operational method can be established that either allows minimising stack degradation or maximising hydrogen production, using the same system and means provided, developing a system and method as those described below.

### DESCRIPTION OF THE INVENTION

The present invention relates to a system that allows monitoring and controlling a stack, as well as providing two different operational methods for said system that enable a user to select between an operational method that minimises stack degradation or an operational method that maximises hydrogen production.

The following parameters are involved in stack operation, efficiency and duration:
- Temperature: a high temperature is beneficial from a thermodynamic standpoint, as it reduces the necessary electricity, since at a higher working temperature the greater the thermal energy demanded by the endothermic process and the lower the electricity (work). However, membranes cannot withstand temperatures above 70°C.
- Current density: a stack will degrade more rapidly at a greater operational current density, decreasing its efficiency and increasing the electricity demand in order to produce the same amount of hydrogen.
- Quality of the recirculation water, specifically conductivity: the higher the conductivity the greater the stack degradation.

Another important factor to consider when evaluating stack operation is the temperature difference between the stack input and output, as a certain temperature gradient should not be exceeded to prevent accelerating degradation.

A simultaneous combination of the control of the aforementioned variables (stack input temperature, temperature difference between stack output and input, water conductivity, and current density), depending on the control parameters defined, allows obtaining different operation modes: a first mode that intends to minimise stack degradation; and a second mode that intends to maximise hydrogen production, using the same system implemented changing only the control parameters.

The temperature at the stack input, the temperature difference between the stack input and output, and the conductivity of the water are controlled by independent control loops connected to the necessary meters, transmitters and actuators. In general, a frequency variator is generally acted on to change the speed of a fan with regard to the stack input temperature, a pump to control the temperature difference in the stack input and output, and another circulation pump to control water conductivity.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### DESCRIPTION OF THE FIGURES

To complement the present description, and to help to better understand the characteristics of the invention according to a preferred practical embodiment thereof, the said description is accompanied, as an integral part thereof, by a set of drawings where the following has been represented in an illustrative and non-limiting manner:
Figure 1 shows a first control loop in charge of ensuring that the temperature at the stack input does not exceed a given temperature.
Figure 2 shows a second control loop meant to ensure that the temperature difference between the stack anode output and input does not exceed a given value.
Figure 3 shows a third control loop in charge of keeping water conductivity within a range of values.
Figure 4 shows a general representation of the electrolysis stack monitoring and control system.

### PREFERRED EMBODIMENT OF THE INVENTION

In view of the figures, a preferred embodiment of the proposed invention is described below.

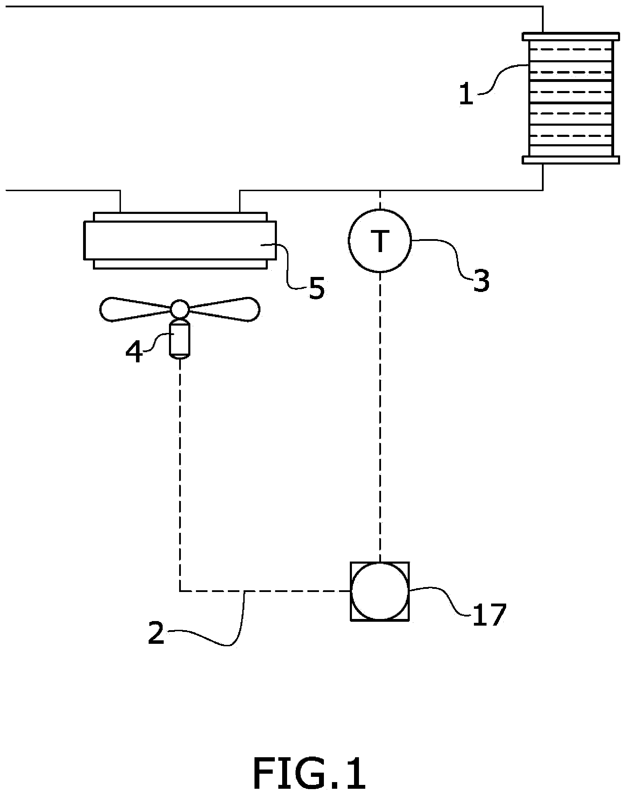

Figure 1 shows a first control loop (2) of an electrolysis stack (1) that intends to ensure that the stack input temperature does not exceed a given temperature, which comprises a first meter and transmitter (3) of the temperature (T1) acting by means of a first temperature controller (17) on a frequency variator (not shows) of a fan (4) associated with a heat exchanger (5) mounted in series with the input of the stack (1).

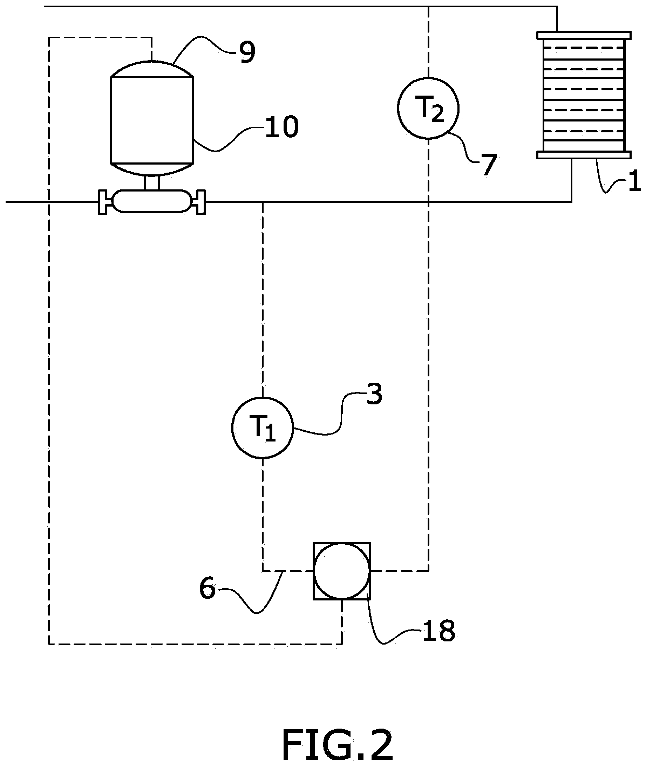

Figure 2 shows a second control loop (6) that intends to ensure that the temperature difference between the stack output and input is not greater than a given value. This second control loop (6) comprises a second meter and transmitter (7) for the temperature (T2), mounted at the input of the stack (1), the first meter and transmitter (3) of the temperature (T1) mounted at the input of the stack, a second temperature controller (18) to which the temperature meters and transmitters (7) and (3) are connected, the output thereof being connected to a frequency variator (9) of a first pump (10) disposed at the stack input.

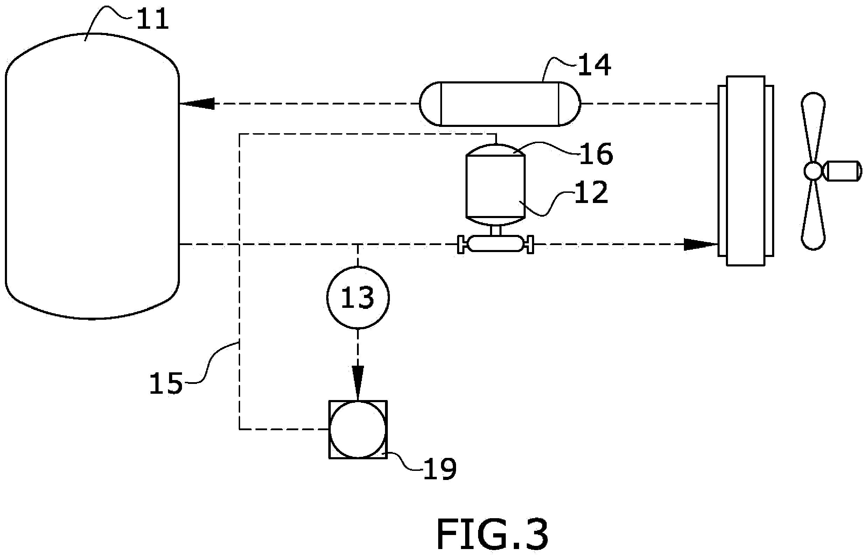

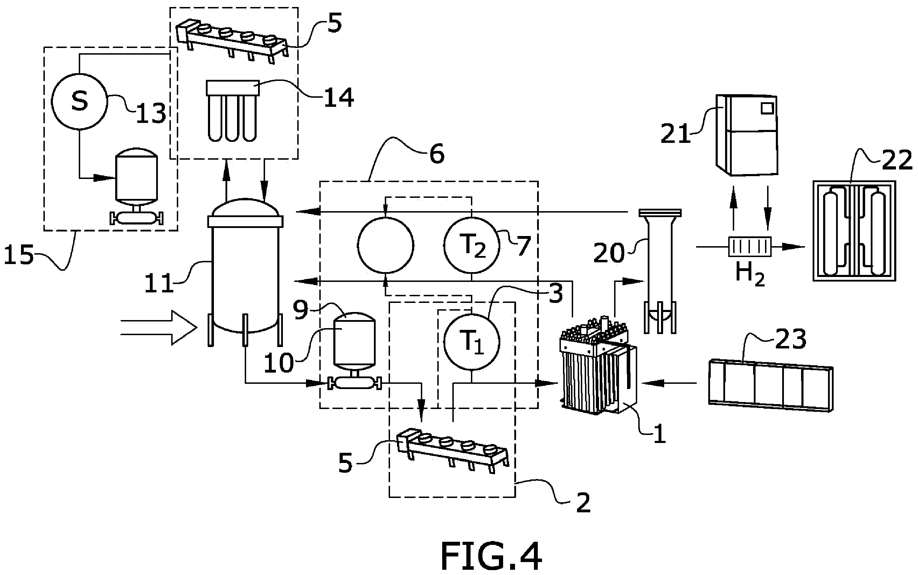

Figure 3 shows a third control loop (15) that controls the quality of the recirculation water, in particular the conductivity, which comprises a meter and transmitter (13) of the water conductivity at the outlet of a tank (11) and where said meter and transmitter (13) is connected to a conductivity controller (19) that acts on a second frequency variator (16) of a second pump (12), such that the water flow passing through resins (14) (figure 4) is varied, reducing conductivity for greater water flows.

The purpose of this third control loop is that the conductivity of the deionised water at the stack input does not exceed a given value during normal operation.

Figure 4 is a general schematic diagram showing:
- The first control loop (2) meant to ensure that the temperature at the stack input does not exceed a given temperature.
- The second control loop (6) meant to ensure that the temperature difference between the stack input and output does not exceed a given value.
- The third control loop (15) meant to ensure that the water conductivity does not exceed a given value.

Also worth noting is the presence of a hydrogen separator (20) connected to the output of the stack (1) and to the water tank (11). The hydrogen obtained from the separator (20) passes through a cooler (21) and then through a purification system (22). In addition, the stack (1) is powered by a rectifier (23).

The system described allows executing two different operational methods:
- A first method that intends to minimise stack degradation which automatically operates in the point of least degradation of the stack, where the control values of the various system control loops are the following:
   - The first loop is meant to keep the stack input temperature under 65°C.
   - The second loop is meant to ensure that the temperature difference between the stack input and output is under 5°C.
   - The third loop ensures that the conductivity of the deionised water does not exceed 0.1 µS/cm at the stack input during normal operation.
   - In addition, the current density applied to the stack is controlled so that it is within manufacturer settings, that is, to ensure that the stack operates always between 10% and 100% of the load.

This mode of operation is the most commonly used in market-available PEM electrolysis stacks, and is recommended by manufacturers for normal operation, as the stack lifetime will be longer and replacement costs will be lower.
- A second method that seeks to ensure maximise hydrogen production, where the control values for the various control loops of the system are as follows:
   - The first loop defines a temperature control value such that the temperature at the stack input does not exceed 70°C.
   - The second control loop ensures that the temperature difference between the stack output and input does not exceed 6°C.
   - The third control loop sets a maximum value of water conductivity of 0.2 µS/cm for more than 5 minutes.
   - With regard to the current density, it will be set such that the stack is always operating at 100% to produce as much hydrogen as possible.

This operation mode is very useful at certain times if the price of electricity (€/kWh) is very low and it is desirable to produce large amounts of hydrogen at a very low cost.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. System for monitoring and controlling an electrolysis stack, **characterised in that** it comprises:
- a first control loop (2) meant to ensure that the temperature at the stack input does not exceed a certain temperature;
- a second control loop (6) meant to ensure that the temperature difference between the stack input and output does not exceed a certain value;
- a third control loop (15) meant to ensure that the water conductivity does not exceed a certain value;
- a current controller to measure the current applied to the stack.

2. System for monitoring and controlling an electrolysis stack according to claim 1, **characterised in that** the first control loop (2) comprises a first meter and transmitter (3) of the temperature (T1) which acts by a first temperature controller (17) on a frequency variator of a fan (4) associated with a heat exchanger (5) mounted in series with the input of the stack (1).

3. System for monitoring and controlling an electrolysis stack according to claim 2 or 3, **characterised in that** the second control loop (6) comprises a second meter and transmitter (7) of the temperature (T2) mounted at the outlet of the stack (1), the first meter and transmitter (3) of the temperature (T1) mounted at the input of the stack, a second temperature controller (18) to which the temperature meters and transmitters (7) and (3) are connected, the output of which is connected to a frequency variator (9) of a first pump (10) arranged at the stack input.

4. System for monitoring and controlling an electrolysis stack, according to any of the preceding claims, **characterised in that** the third control loop (15), that controls the conductivity, comprises a meter and transmitter (13) of the water conductivity at the outlet of a tank (11), where said meter and transmitter (13) is connected to a conductivity controller (19) that acts on a second frequency variator (16) of a second pump (12) such that the water flow passing through resins (14) is changed.

5. Method for minimising stack degradation in a system for monitoring and controlling a stack according to any of claims 1 to 4, **characterised in that**:
- The first loop ensures that the water temperature at the stack input does not exceed 65°C;
- The second loop ensures that the temperature difference between the stack input and output does not exceed 5°C;
- The third loop ensures that the conductivity of the deionised water does not exceed 0.1 µS/cm at the stack input during normal operation;
- also ensuring that the current density applied to the stack is between 10% and 100% of the load.

6. Method for maximising hydrogen production in a stack according to any of claims 1 to 4, **characterised in that**:
- The first loop defines a temperature control value such that the temperature at the stack input does not exceed 70°C;
- The second control loop ensures that the temperature difference between the stack output and input does not exceed 6°C;
- The third control loop sets a maximum value of water conductivity of 0.2 µS/cm for more than 5 minutes;
- The current density is set such that the stack is always operating at 100% to produce as much hydrogen as possible.
